# EUROPEAN PATENT SPECIFICATION

(11) **EP 0 975 086 B1**
(45) Date of publication and mention of the grant of the patent: **21.09.2005**
(21) Application number: 98830447.3
(22) Date of filing: 22.07.1998
(51) Int. Cl.: H02N 1/00, G11B 21/02

(54) **Integrated device comprising a semiconductor material microactuator, in particular for a hard disc read/write head**
Integrierte Anordnung mit einem Halbleiter-Microantrieb, insbesondere für einen Lese-/Schreibkopf für harte Speicherplatten
Dispositif intégré comprenant un microactionneur a semi-conducteur notamment pour un tête de lecture/écriture pour disque dur

(43) Date of publication of application: 26.01.2000
(73) Proprietor: STMicroelectronics S.r.l., 20041 Agrate Brianza (Milano) (IT)
(72) Inventor: Cini, Dario, 20010 Cornaredo (IT); Vigna, Benedetto, 85100 Potenza (IT)
(74) Representative: Cerbaro, Elena

(56) References cited:
- US-A- 5 025 346
- TANG W C ET AL: "LATERALLY DRIVEN POLYSILICON RESONANT MICROSTRUCTURES" SENSORS AND ACTUATORS, vol. 20, no. 1 / 02, 15 November 1989, pages 25-32, XP000135244
- FAN L -S ET AL: "MAGNETIC RECORDING HEAD POSITIONING AT VERY HIGH TRACK DENSITIES USING A MICROACTUATOR-BASED, TWO-STAGE SERVO SYSTEM" IEEE TRANSACTIONS ON INDUSTRIAL ELECTRONICS, vol. 42, no. 3, June 1995, pages 222-233, XP000506382

## Description

The present invention relates to an integrated device comprising a semiconductor material microactuator. In particular, the integrated device according to the present invention is used advantageously, but not exclusively, for actuation of hard disc read/write heads, to which the following description will specifically refer, without however detracting from the general applicability of the device.

As is known, for reading and writing a hard disc, use is generally made of a suspension, which faces the surface of the hard disc in operative condition, to perform roll and pitch movements and follow the surface of the hard disc.

It is also known to actuate the head by means of a double actuation stage, wherein a first actuation stage carries out a coarse movement of the head during tracking, and a second actuation stage performs finer adjustment of the head position. To implement the second actuation stage, it has been proposed to use an integrated microactuator of rotary electrostatic type, interposed between the suspension and the head, and controlling the position of the head with micrometric accuracy.

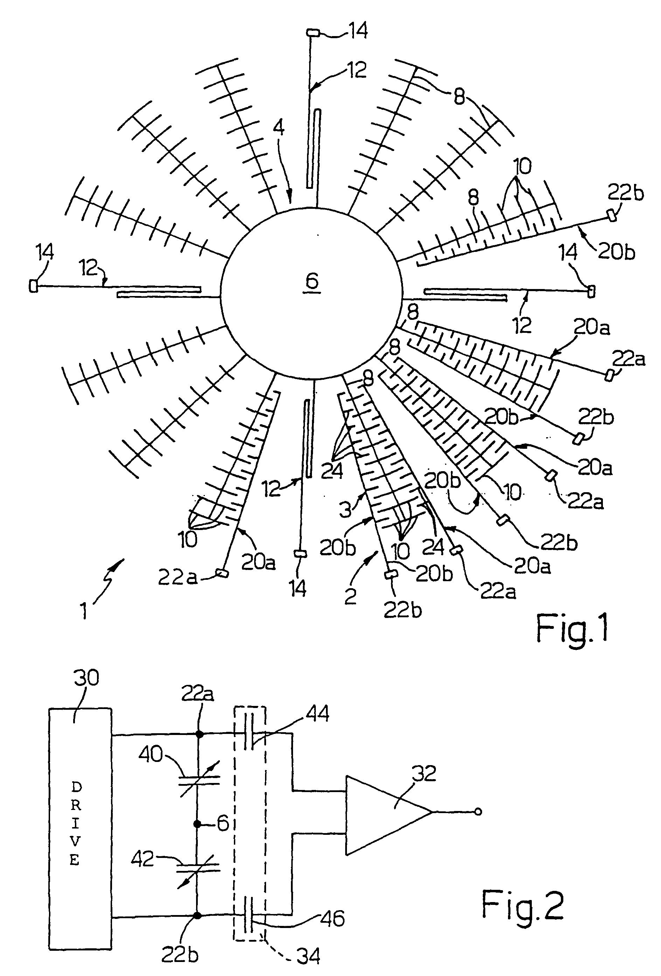

An integrated microactuator of electrostatic type is shown schematically in figure 1. For a more detailed description of the structure of an integrated rotary electrostatic microactuator, see for example patent US-A-5,025,346.

As shown in figure 1, the microactuator 1 comprises an outer stator 2, which connected in use to a suspension (not shown), and an inner rotor 4, electrostatically coupled to the stator 3 and supporting a read/write head (not shown).

Rotor 4 comprises a suspended mass 6 with a substantially circular shape, and a plurality of mobile arms 8, extending radially towards the exterior, starting from the suspended mass 6, identical to one another and angularly equidistant from one another. Each mobile arm 8 supports a plurality of mobile electrodes 10, extending in a substantially circumferential direction on both sides of the respective mobile arm 8.

Rotor 4 additionally comprises anchorage and resilient suspension elements (springs 12), resiliently connecting the suspended mass 6 to anchorage regions 14, through which rotor 4 and mobile electrodes 10 are biased.

Stator 2 (only a part whereof is shown in full, owing to the symmetry of the structure) comprises a plurality of pairs of first and second fixed arms 20a, 20b, arranged alternately to each other and extending radially to the suspended mass 6, starting from fixed regions 22a, 22b, which are disposed circumferentially around the rotor 4, and are intercalated with the anchorage regions 14. Fixed regions 22a are connected to each other, like the fixed regions 22b, as explained in detail hereinafter; these regions thus electrically define two nodes, which for simplicity are shown hereinafter as a first node 22a and a second node 22b.

Pairs of fixed arms 20a, 20b are associated with the mobile arms 8, such that a mobile arm 8 of the rotor 4 is arranged between two fixed arms 20a, 20b of each pair. Each fixed arm 20a, 20b also supports a plurality of fixed electrodes 24, which extend in a substantially circumferential direction towards the corresponding mobile arm 8; the fixed electrodes 24 are interdigitated with the mobile electrodes 10 of the respective mobile arms 8. In the microactuator 1, the first fixed arms 20a, arranged on a same side of the respective mobile arms 8 (in the example illustrated the arms to the right), are all connected to the first node 22a, and are thus all biased to a same first potential, and the second fixed arms 20b, arranged on the other side of the respective mobile arms 8 (in the example illustrated the arms to the left), are all connected to the second node 22b, and are thus all biased to a same second potential. Thereby, a capacitive coupling is provided between each fixed electrode 24 and the respective mobile electrode 10, and the structure is electrically equivalent to a first plurality of capacitors connected in parallel between the first node 22a and the suspended mass 6, and to a second plurality of capacitors connected in parallel between the suspended mass 6 and the first node 22a.

Microactuator 1 is connected via nodes 22a, 22b to a drive stage 30 (figure 2), the purpose of which is to apply potential differences between the fixed arms 20a, 20b and the respective mobile arm 8 such as to rotate rotor 4 with respect to stator 2. In particular, due to the capacitive coupling between each mobile arm 8 and the respective pair of fixed arms 20a, 20b, suspended mass 6 is subjected to a transverse force that is proportional to the number of pairs of fixed arms 20a, 20b and mobile arms 24 associated with each other; this force tends to space the mobile arm 8 from the fixed arm 20a, 20b having a lower potential difference, and to draw the mobile arm 8 closer to the fixed arm 20b, 20a having a higher potential difference, thus causing rotation of the suspended mass 6, and consequently actuating the read/write head.

In prototypes of microactuators produced hitherto, nodes 22a, 22b are also used to obtain data relating to the relative positions of the rotor 4 and the stator 2. Nodes 22a, 22b are thus simultaneously drive nodes and measure nodes. The position signal obtained thereby is then used in a feedback loop to carry out accurate adjustment of the position of the read/write head. Therefore it is possible to increase the mechanical band of the microactuator-head system, and to read data recorded on increasingly narrow and dense tracks of the disc. This solution is described for example in the article "Magnetic Recording Head Positioning at Very High Track Densities Using a Microactuator-Based Two-Stage Servo System" by Long-Sheng Fan, Hal H. Ottensen, Timothy C. Reiley and Roger W. Wood, IEEE Transaction on Industrial Electronics, vol. 42, no. 3, June 1995.

Since however, to obtain the required displacements of the rotor 4, the voltages generated by drive stage 30 have relatively high amplitudes, of approximately 80 V, and on the other hand the stage downstream processing the obtained position data (measure stage 32 in figure 2) operates with much lower voltages, of approximately 5 V, it is necessary to arrange an uncoupling structure 34 between nodes 22a, 22b and measure stage 32, as described hereinafter with reference to figure 2.

Figure 2 shows the electrical equivalent of microactuator 1, comprising two variable capacitors 40, 42 arranged in series and representing the capacitive coupling respectively between the electrodes 24, 10 of the fixed arms 20a and the respective mobile arm 8 of rotor 4, and between the electrodes 10, 24 of the mobile arm 8 and the respective second fixed arms 20b. In particular, in figure 2, the intermediate node between the two variable capacitors 40, 42 represents the suspended mass 6 of the rotor 4.

The uncoupling structure 34 comprises two disconnection capacitors 44, 46; in particular disconnection capacitor 44 is arranged between the first node 22a and a first input of the measure stage 32, represented as an operational amplifier, and disconnection capacitor 46 is arranged between the second node 22a and a second input of measure stage 32. In practice, disconnection capacitors 44, 46 are arranged on the path of the signal containing the data relative to the position of rotor 4 with respect to the stator 2.

In the proposed microactuators, uncoupling capacitors 44, 46 are formed through two metal layers at different levels, in order both to prevent distortion of the signal containing the data concerning the position of rotor 4, and to withstand high ohmic drops that are present in the structure.

The microactuators proposed hitherto have many disadvantages.

In particular, uncoupling capacitors 44, 46 form, with capacitors 40, 42, a capacitive divider causing a signal attenuation, reducing the resolution of the measure made by measure stage 32. In addition, parasitic capacities associated with the metal layers that form the uncoupling capacitors 44, 46, reduce further the signal supplied to the measure stage 32.

In addition, the microactuators proposed hitherto occupy a very large area, owing both to the specific low capacity obtainable from metal layers, and signal-processing circuits that must have a lower background noise level than the amplitude of the data signals (of approximately 100 µV).

The occupied large area consequently causes an increase in weight which the support suspension of the read/write head must bear, thus lowering the mechanical resonance frequency and giving rise to an increase in volume, which causes flight problems of the read/write head, because of the aerodynamics deterioration and the inertia increase of the microactuator-head unit.

Tang W C et al: "Laterally Driven polysilicon resonant microstructures" Sensors and Actuators, vol. 20. no. 1/02, 15 November 1989, pages 25-32, XP00135244 and US-A-5 025 346 disclose resonant microstructures having the features of the preamble of claim 1.

The object of the present invention is thus to provide an integrated semiconductor material microactuator eliminating the disadvantages of the microactuators proposed hitherto.

According to the present invention, an integrated device which comprises a semiconductor material microactuator is provided, as defined in claim 1.

For the understanding of the present invention, a preferred embodiment is now described, purely by way of non-limiting example, with reference to the attached drawings, in which:
- figure 1 shows a known integrated microactuator, schematically in plan view;
- figure 2 illustrates an equivalent electric diagram of a known integrated device, comprising the microactuator of figure 1;
- figure 3 illustrates an integrated microactuator according to the present invention, schematically in plan view;
- figure 4 illustrates an electric diagram of the present integrated device.

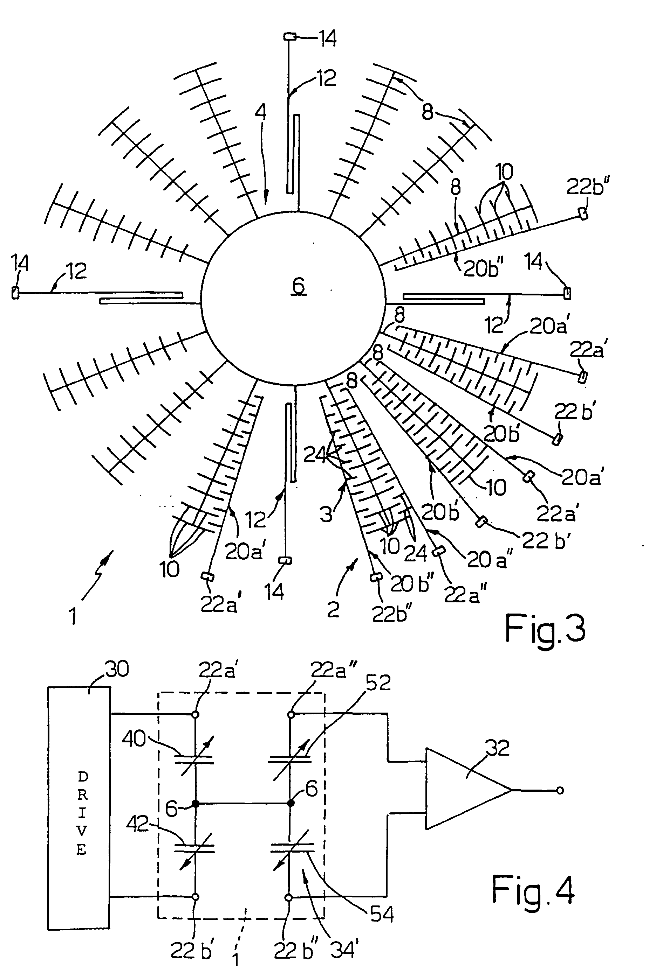

Microactuator 1' in figure 3 has the same general structure of microactuator 1 in figure 1; therefore the parts similar to, or corresponding to those of microactuator 1 in figure 1 are identified with the same reference numbers. Microactuator 1' differs from microactuator 1 of figure 1 in that the fixed arms of the stator, indicated here at 2', are not all connected both to the drive stage 30 and to the measure stage 32; in particular, according to figure 3, some fixed arms are directly connected only to the measure stage 32, whereas the remaining fixed arms are connected only to the drive stage 30.

In detail, for each quadrant of the microactuator 1', two fixed arms, called hereinafter as fixed measure arms and shown at 20a" and 20b", are directly connected to measure stage 32 via respective nodes, called hereinafter as measure nodes, and shown at 22a" and 22b", whereas the remaining fixed arms, called hereinafter as fixed drive arms and shown at 20a' and 20b', are directly connected to the drive stage 30 via respective nodes, hereinafter called drive nodes and shown at 22a' and 22b'.

The separation of the drive functions from the measure functions, and thus the division of fixed arms 20a, 20b into fixed drive arms 20a', 20b' and fixed measure arms 20a", 20b", as well as the division of nodes 22a, 22b into drive nodes 22a', 22b' and measure nodes 22a'', 22b", means that the equivalent electrical circuit of the microactuator 1' is that illustrated in figure 4.

In particular, the uncoupling capacitive structure, now indicated at 34', includes microactuator 1' and comprises a first and a second uncoupling capacitor 52, 54, arranged between the suspended mass 6, and respectively the first and second input of the measure stage 32.

The first uncoupling capacitor 52 is defined by the capacitive connection between the fixed measure arms 20a" and the respective mobile arms 8, and the second uncoupling capacitor 52 is defined by the capacitive connection between the fixed measure arms 20b" and the respective mobile arms 8.

The common part between the drive stage 30 and the measure stage 32 is then only the suspended mass 6 of the rotor 4, which is nevertheless normally kept at a voltage close to that of the ground, and therefore does not cause any problem.

Since the force necessary to actuate the read/write head depends on the number of fixed drive arms 20a', 20b', it is preferable for the pairs of fixed measure arms 20a", 20b" for each quadrant to be no more than two.

The advantages of the described transport structure are as follows. Firstly, forming the uncoupling capacitors 52, 54 using the capacitive coupling inherent to the structure of the microactuator 1', rather than respective metal structures, allows reducing substantially the bulk necessary for the microactuator 1' and thus reducing the associated problems of weight and volume.

In particular, the reduction of the bulk of the microactuator 1' reduces the dimensions of the chip accommodating the microactuator 1' and the respective control logic unit, reducing the weight that the read/write head support suspension must bear, and thus increasing the mechanical resonance band of the system. It is thus possible to read and write hard discs having more tracks than those read and written using present microactuators.

In addition, the data about the position of the rotor 4 with respect to the stator 2 of the microactuator 1', no longer passes through a capacitive divider, but is obtained directly on capacitors 52, 54 belonging to microactuator 1', thus allowing an increase in the resolution of the measurement made by measure stage 32.

Additionally, the division of the fixed arms 20a, 20b, into fixed drive arms 20a', 20b' and fixed measure arms 20a", 20b", and division of the nodes 22a, 22b into drive nodes 22a', 22b' and measure nodes 22a", 22b", makes it possible to design the fixed electrodes 24 of the fixed measure arms 20a", 20b", and the respective associated mobile electrodes, such as to maximise the performance of the measure chain, thus providing a further degree of freedom for production of the system.

Finally, it is apparent that changes and variants can be made to the microactuator described and illustrated here, without departing from the scope of the present invention, as defined in the claims.

## Claims

1. An integrated device comprising a semiconductor material microstructure (1'), comprising a stator element (2') and a rotor element (4) electrostatically coupled to each other; said rotor element (4) comprising a suspended mass (6) and a plurality of mobile arms (8) extending radially from said suspended mass (6), and said stator element (2') comprising a first plurality of fixed drive arms (20a') and a first plurality of fixed measure arms (20a") extending radially to said suspended mass (6) and facing respective mobile arms (8); said first plurality of fixed drive arms being connected to drive means (30) and said first plurality of fixed measure arms being connected to measure means (32) for measuring the position of said rotor element (4) with respect to said stator element (2'), said fixed arms and said mobile arms (8) forming capacitive uncoupling means (52, 54) arranged between said drive means and said measure means;
**characterized in that** said microstructure is a microactuator (1'); said stator element (2') comprises a second plurality of fixed drive arms (20b') and a second plurality of fixed measure arms (20b") associated with respective mobile arms (8) of said rotor element (4), so that some mobile arms (8) are interposed between a fixed drive arm (20a') of said first plurality of fixed drive arms and a fixed drive arm (20b') of said second plurality of fixed drive arms and some mobile arms (80) are interposed between a fixed measure arm (20a') of said first plurality of fixed measure arms and a fixed measure arm (20b') of said second plurality of measure drive arms (20a', 20a"),
and **in that** said fixed measure arms of said first and second pluralities of fixed measure arms form a feedback structure for controlling operation of said microactuator.

2. An integrated device according to claim 1, **characterized in that** for each quadrant of said microactuator (1'), said fixed arms (20a', 20b', 20a'', 20b") comprise a plurality of pairs of fixed drive arms (20a', 20b') facing a same mobile arm (8) and connected directly to said drive means (30), and at least one pair of fixed measure arms (20a", 20b") facing a same mobile arm (8) and connected directly to said measure means (32).

3. An integrated device according to claim 2, **characterized in that** said microactuator forms a first and a second capacitive element (40, 42) having first terminals connected to each other and second terminals connected to said drive means (30), said first capacitive element (40) being formed by said fixed drive arms (20a') of said first plurality of fixed drive arms and by the respective mobile arms (8), and said second capacitive element (42) being formed by said fixed drive arms (20b') of said second plurality of fixed arms and the respective mobile arms (8); and **in that** said microactuator further comprises a third and a fourth capacitive element (52, 54), having first terminals connected to said first terminals of said first and second capacitive element (40, 42), and second terminals connected to said measure means (32), said third capacitive element (52) being formed by said fixed drive arms (20a") of said first plurality of fixed measure arms and by the respective mobile arms (8), and said fourth capacitive element (54) being formed by said fixed measure arms (20b") of said second plurality of fixed measure arms and the respective mobile arms (8).

4. An integrated device according to any of the preceding claims, **characterized in that** said microactuator (1') is interposed between a suspension and a head of a hard disk drive unit.

## Patentansprüche

1. Integrierte Vorrichtung mit einer Halbleitermaterial-Mikrostruktur (1'), mit einem Statorelement (2') und einem Rotorelement (4), die elektrostatisch miteinander gekoppelt sind; wobei das Rotorelement (4) eine aufgehängte Masse (6) und eine Mehrzahl beweglicher Arme (8) aufweist, die sich radial von der aufgehängten Masse (6) weg erstrecken, und wobei das Statorelement (2') eine erste Mehrzahl feststehender Antriebsarme (20a') und eine erste Mehrzahl feststehender Messarme (20a") aufweist, die sich radial zu der aufgehängten Masse (6) hin erstrecken und jeweiligen beweglichen Armen (8) gegenüberliegen; wobei die erste Mehrzahl feststehender Antriebsarme mit einer Antriebseinrichtung (30) verbunden ist und die erste Mehrzahl feststehender Messarme mit einer Messeinrichtung (32) zum Messen der Position des Rotorelements (4) in Bezug auf das Statorelement (2') verbunden ist, wobei die feststehenden Arme und die beweglichen Arme (8) eine kapazitive Entkopplungseinrichtung (52, 54) bilden, die zwischen der Antriebseinrichtung und der Messeinrichtung angeordnet ist,
**dadurch gekennzeichnet, dass** es sich bei der Mikrostruktur um einen Mikrobetätiger (1') handelt; dass das Statorelement (2') eine zweite Mehrzahl feststehender Antriebsarme (20b') und eine zweite Mehrzahl feststehender Messarme (20b") aufweist, die jeweiligen beweglichen Armen (8) des Rotorelements (4) zugeordnet sind, so dass einige bewegliche Arme (8) zwischen einem feststehenden Antriebsarm (20a') der ersten Mehrzahl feststehender Antriebsarme und einem feststehenden Antriebsarm (20b') der zweiten Mehrzahl feststehender Antriebsarme angeordnet sind und einige beweglichen Arme (80) zwischen einem feststehenden Messarm (20a') der ersten Mehrzahl feststehender Messarme und einem feststehenden Messarm (20b') der zweiten Mehrzahl von Mess-Antriebsarmen (20a', 20a") angeordnet sind,
und dass die feststehenden Messarme der ersten und der zweiten Mehrzahl feststehender Messarme eine Rückkopplungsanordnung zum Steuern des Betriebs des Mikrobetätigers bilden.

2. Integrierte Vorrichtung nach Anspruch 1,
**dadurch gekennzeichnet, dass** für jeden Quadranten des Mikrobetätigers (1') die feststehenden Arme (20a', 20b', 20a", 20b") eine Mehrzahl von Paaren feststehender Antriebsarme (20a', 20b') aufweisen, die einem gleichen beweglichen Arm (8) gegenüberliegen und mit der Antriebseinrichtung (30) direkt verbunden sind, und zumindest ein Paar feststehender Messarme (20a", 20b") aufweisen, die einem gleichen beweglichen Arm (8) gegenüberliegen und mit der Messeinrichtung (32) direkt verbunden sind.

3. Integrierte Vorrichtung nach Anspruch 2,
**dadurch gekennzeichnet, dass** der Mikrobetätiger ein erstes und ein zweites kapazitives Element (40, 42) bildet, die miteinander verbundene erste Anschlüsse und mit der Antriebseinrichtung (30) verbundene zweite Anschlüsse aufweisen, wobei das erste kapazitive Element (40) durch die feststehenden Antriebsarme (20a') der ersten Mehrzahl feststehender Antriebsarme und durch die jeweiligen beweglichen Arme (8) gebildet ist und wobei das zweite kapazitive Element (42) durch die feststehenden Antriebsarme (20b') der zweiten Mehrzahl feststehender Arme und die jeweiligen beweglichen Arme (8) gebildet ist; und dass der Mikrobetätiger ferner ein drittes und ein viertes kapazitives Element (52, 54) aufweist, die mit den ersten Anschlüssen des ersten und des zweiten kapazitiven Elements (40, 42) verbundene erste Anschlüsse sowie mit der Messeinrichtung (32) verbundene zweite Anschlüsse aufweisen, wobei das dritte kapazitive Element (52) durch die feststehenden Antriebsarme (20a") der ersten Mehrzahl feststehender Messarme und durch die jeweiligen beweglichen Arme (8) gebildet ist und wobei das vierte kapazitive Element (54) durch die feststehenden Messarme (20b") der zweiten Mehrzahl feststehender Messarme und die jeweiligen beweglichen Arme (8) gebildet ist.

4. Integrierte Vorrichtung nach einem der vorhergehenden Ansprüche,
**dadurch gekennzeichnet, dass** der Mikrobetätiger (1') zwischen einer Aufhängung und einem Kopf einer Festplatten-Antriebseinheit angeordnet ist.

## Revendications

1. Dispositif intégré comprenant une microstructure de matériau semi-conducteur (1'), comprenant un élément de stator (2') et un élément de rotor (4) couplés de manière électrostatique l'un à l'autre ; ledit élément de rotor (4) comprenant une masse suspendue (6) et une pluralité de bras mobiles (8) s'étendant radialement à partir de ladite masse suspendue (6) et ledit élément de stator (2') comprenant une première pluralité de bras de commande fixes (20a') et une première pluralité de bras de mesure fixes (20a") s'étendant radialement à ladite masse suspendue (6) et faisant face à des bras mobiles respectifs (8) ; ladite première pluralité de bras de commande fixes étant connectée à des moyens de commande (30) et ladite première pluralité de bras de mesure fixes étant connectée à des moyens de mesure (32) pour mesurer la position dudit élément de rotor (4) par rapport au dit élément de stator (2'), lesdits bras fixes et lesdits bras mobiles (8) formant des moyens de découplage capacitifs (52, 54) agencés entre lesdits moyens de commande et lesdits moyens de mesure ;
**caractérisé en ce que** ladite microstructure est un microactionneur (1') ; ledit élément de stator (2') comprend une deuxième pluralité de bras de commande fixes (20b') et une deuxième pluralité de bras de mesure fixes (20b") associées à des bras mobiles (8) respectifs dudit élément de rotor (4), de manière que certains bras mobiles (8) soient interposés entre un bras de commande fixe (20a') de ladite première pluralité de bras de commande fixes et un bras de commande fixe (20b') de ladite deuxième pluralité de bras de commande fixes et certains bras mobiles (80) soient interposés entre un bras de mesure fixe (20a') de ladite première pluralité de bras de mesure fixes et un bras de mesure fixe (20b') de ladite deuxième pluralité de bras de commande de mesure fixes (20a', 20a"),
et **en ce que** lesdits bras de mesure fixes desdites première et deuxième pluralités de bras de mesure fixes forment une structure de rétroaction pour commander le fonctionnement dudit microactionneur.

2. Dispositif intégré selon la revendication 1, **caractérisé en ce que** pour chaque quadrant dudit microactionneur (1'), lesdits bras fixes (20a', 20b', 20a", 20b") comprennent une pluralité de paires de bras de commande fixes (20a', 20b') faisant face à un même bras mobile (8) et connectée directement auxdits moyens de commande (30) et au moins une paire de bras de mesure fixes (20a", 20b") faisant face à un même bras mobile (8) et connectée directement auxdits moyens de mesure (32).

3. Dispositif intégré selon la revendication 2, **caractérisé en ce que** ledit microactionneur forme un premier et un deuxième élément capacitif (40, 42) ayant des premières bornes connectées l'une à l'autre et des deuxièmes bornes connectées auxdits moyens de commande (30), ledit premier élément capacitif (40) étant formé par lesdits bras de commande fixes (20a') de ladite première pluralité de bras de commande fixes et par les bras mobiles respectifs (8) et ledit deuxième élément capacitif (42) étant formé par lesdits bras de commande fixes (20b') de ladite deuxième pluralité de bras de commande fixes et par les bras mobiles respectifs (8) ;
et **en ce que** ledit microactionneur comprend en outre un troisième et un quatrième élément capacitif (52, 54), ayant des premières bornes connectées auxdites premières bornes desdits premier et deuxième éléments capacitifs (40, 42) et des deuxièmes bornes connectées auxdits moyens de mesure (32), ledit troisième élément capacitif (52) étant formé par lesdits bras de commande fixes (20a") de ladite première pluralité de bras de mesure fixes et par les bras mobiles respectifs (8) et ledit quatrième élément capacitif (54) étant formé par lesdits bras de mesure fixes (20b") de ladite deuxième pluralité de bras de mesure fixes et par les bras mobiles respectifs (8).

4. Dispositif intégré selon l'une quelconque des revendications précédentes, **caractérisé en ce que** ledit microactionneur (1') est interposé entre une suspension et une tête d'une unité de commande de disque dur.
